(19) Europäisches Patentamt
European Patent Office
Office européen des brevets

(11) **EP 1 968 398 B1**

(12) **FASCICULE DE BREVET EUROPEEN**

(45) Date de publication et mention
de la délivrance du brevet:
**20.07.2011 Bulletin 2011/29**

(51) Int Cl.:
***A23L 1/212*** *(2006.01)*   ***A23C 21/08*** *(2006.01)*

(21) Numéro de dépôt: **06807570.4**

(22) Date de dépôt: **26.10.2006**

(86) Numéro de dépôt international:
**PCT/EP2006/067803**

(87) Numéro de publication internationale:
**WO 2007/048818 (03.05.2007 Gazette 2007/18)**

(54) **PUREE DE FRUITS OU DE LEGUMES MICROFOISONNEE ET SON PROCEDE DE PREPARATION**

MIKROGESCHÄUMTES FRUCHT- ODER GEMÜSEPÜREE UND VERFAHREN ZU SEINER HERSTELLUNG

MICROFOAMED FRUIT OR VEGETABLE PUREE AND METHOD FOR PREPARING SAME

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **26.10.2005 FR 0510926**

(43) Date de publication de la demande:
**17.09.2008 Bulletin 2008/38**

(73) Titulaire: **COMPAGNIE GERVAIS DANONE**
**75009 Paris (FR)**

(72) Inventeurs:
• **VASLIN, Sophie**
**F-92210 Saint Cloud (FR)**
• **VALENTINI, Céline**
**F-92320 Chatillon (FR)**
• **BALERIN, Céline**
**F-78530 Buc (FR)**

(74) Mandataire: **Warcoin, Jacques et al**
**Cabinet Régimbeau**
**20, rue de Chazelles**
**75847 Paris Cedex 17 (FR)**

(56) Documents cités:
**EP-A- 1 166 655    EP-A- 1 284 106**
**WO-A-2004/004481    US-A- 2 131 650**

**Description**

La présente invention concerne une purée de fruits ou de légumes microfoisonnée stable et son procédé de préparation.

Les purées de fruits peuvent avoir une texture collante pâteuse en bouche, avec une légère astringence et une acidité marquée. En vue d'améliorer les qualités sensorielles de la purée de fruits, et d'alléger l'apport volumique en sucres, le microfoisonnement de la purée a été la technologie envisagée.

Les systèmes alimentaires foisonnés sont complexes, car constitués de phases dispersées variées dans un milieu continu aqueux telles que les bulles d'air ou les cristaux de sucre. Afin de garantir la robustesse des formulations d'un point de vue industriel, tout en maintenant une bonne organoleptie de ces mousses, une attention particulière est apportée à la formulation afin de faciliter l'aptitude au foisonnement de la mousse et de garantir sa stabilité au cours du temps.

Les mousses de fruits ayant un fort taux de foisonnement (50 à 100 %) sont déjà connus - dans l'art antérieur. Toutefois, le microfoisonnement ne donne pas le même résultat qu'un foisonnement classique. En effet le microfoisonnement consiste à injecter une très faible quantité d'air (< 50% en volume, de préférence < 30% en volume, encore mieux 20% en volume) en vue d'obtenir des bulles de très faible granulométrie, quasi invisibles à l'oeil nu : telles que D 3,2 ≤ inférieures à 200 $\mu$m. Ce microfoisonnement n'a pas pour objectif de modifier la texture macroscopique de la purée de fruits ou de légumes, comme pourrait le faire un foisonnement classique, qui consiste à injecter 50 à 100% en volume d'air. Par contre, l'intérêt de cette technologie est de modifier les propriétés sensorielles de la purée de fruits ou de légumes sans en modifier l'aspect visuel. Le bénéfice est d'apporter une sorte de « signature » de la purée de fruits ou de légumes, permettant sa différentiation.

Parmi les ingrédients utilisés dans la fabrication de mousses, le rôle des émulsifiants est déterminant dans les processus de formation de la mousse, alors que celui des agents stabilisants va essentiellement intervenir dans la stabilisation de celle-ci au cours de sa durée de vie.

La gélatine occupe une place de choix parmi les émulsifiants et les agents stabilisants, compte tenu de ses propriétés multifonctionnelles: dans les systèmes aérés, elle joue deux rôles fondamentaux en agissant comme agent de foisonnement, puis en permettant la stabilisation de la texture aérée. Cependant, son utilisation est régulièrement remise en question, pour des questions de sécurité alimentaire (problème de la BSE) ou religieuses. Or, son remplacement n'est pas simple.

En effet, le choix de l'émulsifiant est important car il conditionne l'aptitude au foisonnement de la purée de fruits ou de légumes.

La demande de brevet WO 2004/04481 décrit l'utilisation de protéines sériques en tant qu'émulsifiant et en particulier du lacprodan®. Toutefois, les protéines sériques du lacprodan® ne sont pas dégraissées. Elles contiennent environ 4 % en poids de matières grasses. De plus, les protéines sériques du lacprodan® ont été dénaturées car elles ont été pasteurisées. D'après les abaques de DANEBERG en cas de pasteurisation, le taux de dénaturation des protéines sériques est en général compris entre 60 et 90 %. Par ailleurs, il est connu que la matière grasse permet de stabiliser les mousses obtenues. En outre, le taux de foisonnement utilisé dans la mousse décrite dans ce document est compris entre 50 et 130 %. Il existe donc, pour des raisons nutritionnelles, un besoin de mousse de fruits ou de légumes stabilisée sans apport de matières grasses.

Le brevet US 2 131 650 décrit une mousse de fruits ou de légumes contenant la partie solide du sérum du lait obtenue par précipitation de la caséine à partir du lait. Cette partie solide contient donc de la caséine ainsi qu'un petit peu de protéines lactosériques, ces protéines ayant été dénaturées lors de la précipitation.

La demande de brevet EP 1 166 655 décrit une mousse de fruits obtenue à l'aide de protéines dénaturées. Au vu du traitement thermique appliqué au paragraphe [0021] du document, on obtient un taux de dénaturation compris entre 93 et 100 %. Dans le cas de l'exemple 1, les protéines sont totalement dénaturées (taux de dénaturation de 100 %). Ainsi, aucun des documents de l'art antérieur ne décrit ni ne suggère l'utilisation de protéines sériques dégraissées et natives pour obtenir une mousse stable par un procédé de microfoisonnement.

Or, de façon surprenante, les inventeurs ont découverts que les protéines sériques « dégraissées », dépourvues de matières grasses, et natives (c'est à dire non dénaturées comme le sont les sous-produits de l'industrie fromagère) tel qu'obtenus par un procédé de microfiltration ou d'échanges par chromatographie d'ions sont d'excellents candidats pour le microfoisonnement des purées de fruits ou de légumes. Ces protéines restent natives malgré le foisonnement, c'est-à-dire qu'elles ne sont pas dénaturées par un tel traitement mécanique. En effet, d'après le livre de Philippe Cayot et Denis Lorient, « les structures et technofonctions des protéines du lait » (Arilait recherches, Edition Lavoisier 1998, 2éme partie, pages 105-203), seuls les traitements thermiques et les modifications de pH peuvent dénaturer les protéines sériques du lait. Ceci est d'ailleurs confirmé par la demande de brevet EP 1 284 106, paragraphe [0017] qui explique que la dénaturation des protéines dans la mousse n'a lieu qu'après le foisonnement.

En outre, les inventeurs de la présente demande, se sont aperçus de façon surprenante que dans le cas où les protéines sériques sont utilisés en tant qu'agent foisonnant, il n'est pas toujours nécessaire d'utiliser également un agent de texture pour maintenir la stabilité du produit microfoisonné stable et éviter une augmentation de la taille des bulles. En effet, la quantité de pectines présente dans la plupart des purées de fruits ou de légumes est suffisante pour maintenir la texture microfoisonnée au cours de la durée de conservation du produit.

La présente invention concerne donc une purée de fruits ou de légumes microfoisonnée contenant desprotéines sériques solubles dégraissées natives et éventuellement un agent de texture, le taux de foisonnement étant inférieur ou égal à 50%, le diamètre moyen des bulles étant inférieur à 200 $\mu$m et la purée de fruits ou de légumes microfoisonnée étant stable pendant au moins 28 jours à une température comprise entre 1 et 10°C.

Au sens de la présente invention, on entend par le terme « microfoisonnement » l'injection d'une très faible quantité de gaz (< 50% en volume, de préférence < 30% en volume, avantageusement = 20% en volume) en vue d'obtenir après foisonnement des bulles de très faible granulométrie, quasiment invisibles à l'oeil nu : le diamètre moyen des bulles étant inférieur à 200 $\mu$m. Avantageusement, le gaz injecté est traditionnellement choisi parmi l'air et l'azote mais peut contenir aussi du protoxyde d'N2 ($N_2O$) ou du $CO_2$

Au sens de la présente invention, on entend par le terme « purée de fruits ou de légumes microfoisonnée », la purée obtenue suite au microfoisonnement selon la présente invention.

Ainsi, le taux de foisonnement d'une purée de fruits ou de légumes microfoisonnée selon la présente invention est < 50%, de préférence < 30%, avantageusement = 20%. Le taux de foisonnement est défini comme la fraction volumique de gaz dans le produits microfoisonné et est défini de la façon suivante :

$$\text{Taux de foisonnement} = \frac{(\text{Masse pot produit non foisonné} - \text{Masse pot produit foisonné}) \times 100}{\text{Masse pot produit non foisonné}}$$

Le diamètre moyen d'une bulle D $_{3,2}$ répond à l'équation suivante :

$$D_{3,2} = \text{somme } (i = 1 \text{ à } n)\, d_i^3 \, / \, \text{somme } (i = 1 \text{ à } n)\, d_i^2$$

Avantageusement le diamètre moyen D $_{3,2}$ des bulles est compris entre 50 et 200 $\mu$m, de façon avantageuse compris entre 80 et 180 $\mu$m, de façon encore plus avantageuse compris entre.100 et 150 $\mu$m.

Au sens de la présente invention, on entend par le terme de « native », toute protéine non ou très faiblement dénaturée (le taux de dénaturation des protéines peut être calculé par la quantification du pourcentage de protéines sériques non solubilisées à leur pH isoélectrique). Il ne s'agit donc pas d'un sous-produit de l'industrie fromagère. En outre le traitement thermique qui lui est appliqué si nécessaire doit être réalisé à une température ne provoquant pas la dénaturation de la protéine et pendant un temps suffisant mais limité. Avantageusement les protéines sériques natives solubles dégraissées sont obtenues par un procédé de déminéralisation et/ou d'ultrafiltration et/ou microfiltration du lait dénué de chaleur ou par un traitement chimique ou enzymatique du lait. Avantageusement, le taux de dénaturation des protéines sériques est inférieur à 5 %, de façon avantageuse, inférieur à 2 %, de façon encore plus avantageuse, il est d'environ 1 %. Ces procédés permettent de préserver la qualité naturelle et la bioactivité des protéines sériques obtenues. Avantageusement les protéines sériques selon la présente invention contiennent au moins 50% en poids de béta-lactoglobuline, de façon avantageuse, 57% en poids et avantageusement moins de 20% en poids d'$\alpha$-lactalbumine, avantageusement 18% en poids.

Au sens de la présente invention on entend par le terme de « dégraissée », toute protéine contenant moins de 1% en poids de matière grasse, avantageusement moins de 0,5% en poids, de façon avantageuse, environ 0,4% en poids de matière grasse. Avantageusement ces protéines sériques natives solubles dégraissées sont issues d'isolats de protéines sériques natives solubles dégraissées dont la teneur en protéines sériques solubles dégraissées natives est avantageusement supérieure à 80% en poids, de façon avantageuse supérieure à 90% en poids.

Avantageusement ces isolats contiennent peu de lactose, avantageusement moins de 10% en poids, de façon avantageuse, moins de 4% en poids, de façon encore plus avantageuse environ 3% en poids.

Avantageusement les isolats de protéines sériques natives solubles dégraissées sont le Prolacta 90 commercialisé par la société Lactalis, l'Ultra whey-99 commercialisé par la société Volactive ou le Promilk 852 FB commercialisé par la société Ingredia.

De façon avantageuse, la purée de fruits ou de légumes microfoisonnée selon la présente invention contient entre 0,08 et 2 % en poids de protéines sériques solubles dégraissées natives par rapport au poids total de la purée de fruits ou de légumes, avantageusement entre 0,09% et 2 % en poids de protéines sériques solubles dégraissées natives par rapport au poids total de la purée de fruits ou de légumes, de façon encore plus avantageuse entre 0,1% et 2 % en poids de protéines sériques solubles dégraissées natives par rapport au poids total de la purée de fruits ou de légumes.

Au sens de la présente invention on entend par « purée de fruits ou de légumes » un produit fermentescible mais non fermenté obtenu par tamisage ou autre procédé similaire de la partie comestible de fruits ou de légumes entiers ou épluchés sans élimination de jus. La purée peut être concentrée et dans ce cas est obtenue à partir de purée de fruits ou de légumes par élimination physique d'une partie déterminée de l'eau de constitution.

Avantageusement, le fruit est choisi parmi les fruits connus de l'homme de l'art tels que par exemple la pomme, la banane, la framboise, la poire, la mangue, la fraise, la pêche et l'abricot.

Avantageusement, le légume est choisi parmi les légumes connus de l'homme de l'art tels que par exemple la carotte, la betterave et la tomate.

Au sens de la présente invention, on entend par « agent de texture » tout additif conçu pour donner une structure et une consistance déterminée à la purée selon la présente invention. Avantageusement, il est choisi parmi l'agar agar, les carraghénanes et la pectine.

Avantageusement, il s'agit de la pectine qui est une substance gélifiante que l'on retrouve couramment dans le règne végétal et que l'on utilise souvent pour épaissir les confitures et les gelées. La concentration en agent de texture est avantageusement comprise entre 0,1 et 2% en poids par rapport au poids total de la purée de fruits ou de légumes microfoisonnée selon la présente invention.

Avantageusement, la purée de fruits ou de légumes microfoisonnée selon la présente invention ne contient pas de gélatine.

De façon avantageuse, la purée de fruits ou de légumes microfoisonnée selon la présente invention est pasteurisée, congelée ou non. De façon encore plus avantageuse la purée de fruits ou de légumes microfoisonnée selon la présente invention a une valeur Brix comprise entre 10° et 35°.

Les purées de fruits ou de légumes microfoisonnées selon la présente invention ont les qualités organoleptiques de texture légèrement aérée, fondante en bouche et de diminution de l'astringence et de l'acidité perçues. Par ailleurs le goût de la purée est non modifié par rapport à une purée non microfoisonnée et la saveur et perception des fruits ou légumes est intacte.

De plus, le micro foisonnement de la purée de fruits ou de légumes selon la présente invention fait ressortir le goût sucré de cette purée. Ainsi avantageusement la purée de fruits ou de légumes microfoisonné selon la présente invention contient des teneurs en sucres naturels et ne contient pas de sucre ajouté. Avantageusement la teneur en sucre est comprise entre 4 et 40% en poids par rapport au poids total de la purée de fruits ou de légumes microfoisonnée selon la présente invention.

La présente invention concerne en outre un produit multicouche alimentaire frais, avantageusement bicouche, comprenant au moins une couche de produit laitier frais acide ou neutre, avantageusement fermenté, et au moins une couche de purée de fruits ou de légumes microfoisonnée selon la présente invention.

Avantageusement, la couche de purée de fruits ou de légumes microfoisonnée selon la présente invention est située en surface du produit laitier frais acide ou neutre.

De façon avantageuse, la couche de purée de fruits ou de légumes microfoisonnée selon la présente invention est recouverte par une couche de produit laitier frais acide ou neutre ;

Ainsi par exemple, il est possible d'avoir :

- un produit multicouche comprenant les couches successives suivantes (du fond du pot vers la surface) : une couche de produit laitier frais acide ou neutre, une couche purée de fruits ou de légumes microfoisonnée selon la présente invention et une couche de produit laitier frais acide ou neutre ;
- ou un produit bicouche comprenant les couches successives suivantes (du fond du pot vers la surface) : une couche de produit laitier frais acide ou neutre, une couche de purée de fruits ou de légumes microfoisonnée selon la présente invention;
- un produit bicouche comprenant les couches successives suivantes (du fond du pot vers la surface) : une couche de purée de fruits ou de légumes microfoisonnée selon la présente invention et une couche de produit laitier frais acide ou neutre.

Elle concerne également un produit alimentaire frais comprenant un mélange d'un produit laitier frais acide ou neutre et d'une purée de fruits ou de légumes microfoisonnée selon la présente invention.

Au sens de la présente invention, on entend par « produit laitier», tout produit laitier acide ou neutre et donc tout produit laitier fermenté ou acidifié via des ingrédients (avantageusement par de l'acide lactique, citrique ou phosphorique) de pH acide (avantageusement son pH est inférieur à 4,8, de façon avantageuse il est compris entre 3 et 4,8) ou neutre (avantageusement son pH est compris entre 4,8 et 7,3, de façon avantageuse entre 5,5 et 6,8). En particulier il peut s'agir d'un fromage frais ou d'un produit fermenté contenant des ferments vivants (par exemple de la crème acide, du kéfir ou autres) et notamment d'un yoghourt ou de spécialités laitières fermentées assimilées (fermentées par des bactéries lactiques, comme le bifidus actif ou *L. casei*). Dans le cadre de la présente invention on préférera les produits laitiers acides, avantageusement fermentés, de façon avantageuse du type yoghourt. Avantageusement il s'agit d'un yoghourt de type brassé. De façon avantageuse, le produit est fermenté par l'addition de ferments vivants tels que par exemple du *Lactobacillus bulgaricus*, du *Streptococcus thermophilus* et/ou du *Lactobacillus acidophilus* et/ou *bifidus.* Avantageusement, le lait utilisé dans le produit laitier est du lait de vache. Toutefois, d'autres laits peuvent être utilisés en substitution totale ou partielle du lait de vache, tels que par exemple du lait de chèvre, de brebis, de bufflonne ou de jument, ou de façon moins avantageuse des laits d'origine végétal tels que le lait de soja, de coco ou d'avoine.

Le produit laitier acide ou neutre pasteurisé ou stérilisé et éventuellement fermenté est obtenu selon des méthodes bien connues de l'homme du métier. En particulier le procédé pour obtenir un produit laitier acide pasteurisé fermenté comprend les étapes successives suivantes :

- homogénéisation du produit laitier,
- pasteurisation du produit laitier,
- refroidissement du produit laitier,
- ensemencement,
- fermentation jusqu'à l'acidité désirée.

Brièvement, le procédé commence avec du lait cru qui peut contenir également une combinaison de lait entier, lait écrémé, lait condensé, lait sec (extrait sec dégraissé de lait ou équivalent), lactosérum de catégorie A, crème et/ou d'autres ingrédients de fraction du lait tels que par exemple le babeurre, le lactosérum, le lactose ou le lactosérum modifié par enlèvement partiel ou total du lactose et/ou des minéraux ou d'autres ingrédients laitiers pour augmenter la teneur en solide dégraissé, qui sont mélangés pour fournir les teneur en matière grasse et en solide désirées. Bien que non préférée dans le cadre de la présente invention, le produit laitier peut contenir un composant laitier de remplissage, c'est à dire un ingrédient laitier dont une portion est constituée par un ingrédient non laitier, tel que par exemple une huile ou du lait de soja. De façon avantageuse, le produit laitier frais selon la présente invention est un produit allégé en matière grasse c'est à dire contenant de 0 à 15 % en poids, avantageusement de 0 à 5 % en poids de matières grasses par rapport au poids total du produit laitier, en dehors de la purée de fruits ou de légumes.

Avantageusement le produit laitier frais selon la présente invention ne contient pas de gélatine.

Dans un mode particulier de réalisation de l'invention, le produit alimentaire frais selon la présente invention en dehors de la purée de fruits ou de légumes, contient d'autres ingrédients, avantageusement choisis parmi les sirops sucrés, la crème, les morceaux de fruits et le cacao.

Avantageusement, les produits alimentaires frais selon la présente invention sont stables pendant au moins une durée comprise entre 12 et 28 jours, à une température comprise entre 1 et 10°C.

La présente invention concerne en outre un procédé de préparation d'une purée de fruits ou de légumes microfoisonnée selon la présente invention, le procédé comprenant les étapes successives suivantes :

a) mélange de 90 à 98% en poids, avantageusement de 95 % en poids, d'une purée de fruits ou de légumes et de 2 à 10 % en poids, avantageusement de 5 % en poids d'une solution aqueuse foisonnante non foisonnée comprenant les protéines sériques solubles dégraissées natives et éventuellement un agent de texture,.

b) microfoisonnement du mélange et

c) récupération de la purée de fruits ou de légumes microfoisonnée.

Avantageusement, le mélange issu de l'étape (a) a une viscosité comprise entre 0,5 et 8 Pa.s à $100s^{-1}$.

Un foisonneur statique peut être utilisée lors de l'étape (b) du procédé selon la présente invention. Son inconvénient est la plus grande déstructuration de la purée de fruits ou de légumes lors de la mise en oeuvre de cette étape (b). De plus les bulles obtenues à l'aide de ce type de foisonneur sont certes de plus petites tailles mais sont moins stables. Ainsi, avantageusement l'étape (b) est réalisée à l'aide d'un foisonneur dynamique, par exemple du type Mondomix®.

De façon avantageuse, les étapes (a) de mélange entre la purée de fruits ou de légumes et la solution aqueuse foisonnante et (b) de microfoisonnement sont réalisées simultanément en une seule étape.

Avantageusement, le procédé selon la présente invention comprend une étape supplémentaire (d) de conditionnement de la purée de fruits ou de légumes microfoisonnée.

Dans un mode de réalisation particulier le procédé selon la présente invention comprend une étape préalable (α) de préparation de la solution aqueuse foisonnante. Avantageusement la préparation de la solution aqueuse foisonnante non foisonnée comprend les étapes suivantes :

(1) mélange des protéines sériques solubles dégraissées natives, avantageusement sous la forme d'isolats, de l'eau et éventuellement de l'agent de texture sans incorporation d'air, avantageusement sous forte agitation ;

(2) acidification, avantageusement avec de l'acide citrique ou malique, de façon avantageuse jusqu'à un pH compris entre 4 et 4,8, avantageusement de 4,6,

(3) traitement thermique, avantageusement à une température comprise entre 60 et 72°C pendant une durée de 10 à 1mn, de façon avantageuse pendant 1 minute à 72°C.

(4) homogénéisation du mélange obtenu, avantageusement à une pression comprise entre $3.10^6$ Pa et $10.10^6$ Pa.

De façon avantageuse, le mélange des ingrédients dans l'eau est suivi d'une étape (1a) d'hydratation, avantageusement pendant entre 30 minutes et 1 heure, avant l'étape (2) d'acidification.

Avantageusement la solution aqueuse foisonnante contient entre 0,2 et 1% en poids de protéines sériques natives solubles dégraissées par rapport au poids total de la solution aqueuse foisonnante, de façon avantageuse entre 0,5 et 0,8% en poids de protéines sériques natives solubles dégraissées par rapport au poids total de la solution aqueuse foisonnante.

Avantageusement, l'eau utilisée lors de l'étape (1) a été stérilisée puis refroidi à 70-72°C pour permettre l'introduction des protéines sériques et de l'éventuel agent de texture.

La présente invention concerne en outre un procédé de préparation d'un produit multicouche alimentaire frais, avantageusement bicouche, par injection successives, avantageusement directement dans un pot, des couches du produits multicouche selon la présente invention.

La maîtrise du procédé de microfoisonnement passe par une bonne connaissance des paramètres du procédé, tels que la pression dans la tête de foisonnement, la température de foisonnement en lien avec des paramètres formulation, tels que par exemple la concentration en protéines sériques natives solubles dégraissées.

Les exemples suivants sont donnés à titre indicatif non limitatif.

**Exemple 1 préparation d'une purée de pommes microfoisonnée selon la présente invention**

La purée de pommes est fait à partir de fruits frais réduits en purée par un tamisage fin et concentrés par évaporation. Elle ne contient aucun autre ingrédient ou additif. La purée de pommes et est ensuite concentrée sous vide 3 x et a un brix compris entre 30° et 32° (le brix traduit plus ou moins la quantité de sucres naturels). Elle a un pH de 3,7 et une densité de 1,12.

*1- Essai Préliminaire: Test d'aptitude au foisonnement avec un batteur ménager KitchenAid*

Dans un premier temps, l'aptitude au foisonnement de la purée de pommes a été évaluée c'est à dire sa capacité à incorporer de l'air au cours du battage (fouet, vitesse 8, suivi sur 5min) et sa capacité à stabiliser les bulles d'air dispersées dans les heures suivant le battage.

Résultat : Seule une faible quantité d'air a pu être incorporée au cours des 5min de battage, et les bulles formées sont très grosses et coalescent rapidement : l'incorporation de l'air n'est a priori due qu'à la viscosité de la purée, et n'est en rien stabilisée. Conclusion : La purée de pommes ne peut foisonner sans addition d'agents tensioactifs pour former et stabiliser les interfaces air/purée.

*2- préparation d'une purée de pommes microfoisonnée*

L'objectif est d'aérer la purée, avec de petites bulles stables : pour cela, deux facteurs formulation sont déterminants, à savoir la rhéologie et les propriétés interfaciales du milieu.

D'un point de vue rhéologique, la purée de pommes offre une viscosité suffisante pour maintenir les bulles lors de la dispersion, et surtout un seuil d'écoulement qui permet de limiter la déstabilisation de la mousse au repos : l'ajout de texturant ou de gélifiant n'apparaît pas nécessaire, d'autant plus que la quantité de pectines présentes dans la purée de pommes semble être suffisante pour texturer le produit. On limitera simplement la dilution de la purée pour conserver un niveau de viscosité élevé.

D'un point de vue interfacial, comme démontré lors de l'essai préliminaire, l'ajout de tensioactifs est indispensable pour former et stabiliser les interfaces gaz/purée. D'autre part, il est nécessaire d'assurer une élasticité importante des interfaces pour limiter les risques de coalescence et de mûrissement : les bulles doivent de fait rester stables un minimum de 28 jours, dans une matrice de suspension concentré (purée de fruits = suspension de pulpes dans un sérum).

La formulation utilisée est la suivante : 95% en poids de purée de pommes + 5% en poids d'une solution aqueuse foisonnante non foisonnée contenant de l'eau et du Prolacta90 de Lactalis. On obtient ainsi une concentration finale en Prolacta90 de 1,11 % en poids, soit une proportion en poids de protéines sériques de 1%.

L'aération du mélange a été réalisée avec un outil pilote de foisonnement dynamique : le Mini Mondomix®.

La géométrie de la tête de foisonneur est de type « hérisson » (Rotor et Stator à dents, type Mondomix®), avec un volume de battage de 500 mL et des entrefers de 2,5 mm. La vitesse de tête est de 240 tours/min.

La pression dans la tête de foisonnement est fixée à 4x10$^5$ Pa absolus.

Le débit utilisé est de 4,4 kg/h

Résultat : Le foisonnement réalisé en continu, avec des débits matière et gaz maîtrisés, sur la formulation précédemment décrite, a conduit à l'obtention de mousses homogènes et stables.

L'aptitude au foisonnement de la formule et la stabilité des mousses ont été démontrées avec un procédé de type industriel mais à l'échelle laboratoire.

Taille de bulles : bulles visibles, autour de 180$\mu$m à J1.

Stabilité : évolution forte de J0 à J1, puis stabilité nette (validée jusque 28J).

Les réglages du procédé testé permettent l'obtention d'une mousse homogène et stable, avec de petites bulles visibles. Il est à noter que la couleur et la présence de particules dans la purée rend les bulles "peu visibles" ; d'autre part, une optimisation de la vitesse de tête du foisonneur devrait permettre de diminuer la taille des bulles.

**Exemple 2 : préparation d'une purée de fraise microfoisonnée selon la présente invention.**

La purée de fraise utilisée est une purée de fraises concentrée 3 x obtenue comme la purée de pommes selon l'exemple 1 (21° Brix ; pH 3,1).

Pour palier la faible viscosité de la purée (< à 0,4 Pa.s à 100 s$^{-1}$) un texturant a été ajouté : 0,8% en poids de pectine. L'ajout de ce texturant permet de rehausser le niveau de viscosité du mélange et d'assurer la stabilité de la purée microfoisonnée sur 28 jours. Le procédé de fabrication et la formulation sont les mêmes que dans l'exemple 1.

La taille des bulles à J0 est d'environ 150$\mu$m. Cette taille évolue peu sur la période étudiée (28 jours).

**Exemple 3 :préparation d'un produit bicouche contenant une couche de purée de pommes microfoisonnée selon l'exemple 1 et une couche de yaourt allégée nature brassé**

Les produits sont fabriqués à partir de 50% en poids de Taillefine Nature Brassé (% matière grasse = 0,15, % Protéines = 4,35, % Glucides = 0, Extrait sec = 11-12) (couche au fond du pot) et 50% en poids de la purée de pommes microfoisonnée selon l'exemple 1 (couche au dessus du yaourt). Chacune des couches est dosée directement dans le pot par utilisation d'un appareil de type Dosys®.

Le produit bicouche obtenu est également stable (pas de transfert de couleur) pendant 28 jours. D'un point de vue organoleptique, le contraste couleur / texture / saveur est très intéressant, le collant de la purée de fruits disparaissant grâce au microfoisonnement.

**Revendications**

**1.** Purée de fruits ou de légumes microfoisonnée contenant des protéines sériques solubles dégraissées natives et éventuellement un agent de texture, le taux de foisonnement étant inférieur ou égal à 50%, le diamètre moyen des bulles étant inférieur à 200 $\mu$m et la purée de fruits ou de légumes microfoisonnée étant stable pendant au moins 28 jours à une température comprise entre 1 et 10°C.

**2.** Purée de fruits ou de légumes microfoisonnée selon la revendication 1, **caractérisée en ce que** le fruit est choisi parmi la pomme, la banane, la framboise et la fraise.

**3.** Purée de fruits ou légumes microfoisonnée selon l'une quelconque des revendications précédentes, **caractérisée en ce qu'**elle contient entre 0,08 et 2 % en poids de protéines sériques solubles dégraissées natives par rapport au poids total de la purée de fruits ou de légumes.

**4.** Purée de fruits ou de légumes microfoisonnée selon l'une quelconque des revendications précédentes, **caractérisée en ce que** l'agent de texture est de la pectine.

**5.** Purée de fruits ou de légumes microfoisonnée selon l'une quelconque des revendications précédentes, **caractérisée en ce qu'**elle ne contient pas de gélatine.

**6.** Purée de fruits ou de légumes microfoisonnée selon l'une quelconque des revendications précédentes **caractérisée en ce que** les protéines sériques solubles dégraissées natives contiennent au moins 50% en poids de béta-lacta-globuline.

**7.** Purée de fruits ou de légumes microfoisonnée selon l'une quelconque des revendications précédentes, **caractérisée**

**EP 1 968 398 B1**

**en ce qu'**elle est surgelée ou pasteurisée et **en ce qu'**elle a une valeur Brix comprise entre 10° et 35°.

8. Produit multicouche alimentaire frais comprenant au moins une couche de produit laitier frais acide ou neutre, avantageusement fermenté, et au moins une couche de purée de fruits ou de légumes microfoisonnée selon l'une quelconque des revendications 1 à 7.

9. Produit alimentaire frais comprenant un mélange d'un produit laitier frais acide ou neutre et d'une purée de fruits ou de légumes microfoisonnée selon l'une quelconque des revendications 1 à 7.

10. Procédé de préparation d'une purée de fruits ou de légumes microfoisonnée selon l'une quelconque des revendications 1 à 7 comprenant les étapes successives suivantes :

a) mélange de 90 à 98% en poids, avantageusement de 95 % en poids, d'une purée de fruits ou de légumes et de 2 à 10 % en poids, avantageusement de 5 % en poids, d'une solution aqueuse foisonnante non foisonnée comprenant les protéines sériques solubles dégraissées natives et éventuellement un agent de texture ;
b) microfoisonnement du mélange, avantageusement par un foisonneur dynamique et
c) récupération de la purée de fruits ou de légumes microfoisonnée.

11. Procédé selon la revendication 10, **caractérisé en ce que** le mélange issu de l'étape (a) a une viscosité comprise entre 0,5 et 8 Pa.s à 100 s$^{-1}$.

12. Procédé selon l'une quelconque des revendications 10 ou 11 **caractérisé en ce que** les protéines sériques natives dégraissées solubles sont sous la forme d'isolats.

13. Procédé selon l'une quelconque des revendications 10 à 12, **caractérisé en ce qu'**il comprend une étape préalable (α) de préparation de la solution aqueuse foisonnante non foisonnée.

14. Procédé selon la revendication 13 **caractérisé en ce que** la préparation de la solution aqueuse foisonnante non foisonnée comprend les étapes suivantes :

(1) mélange des protéines sériques solubles dégraissées natives, avantageusement sous la forme d'isolats, de l'eau et éventuellement de l'agent de texture sans incorporation d'air,
(2) acidification, avantageusement avec de l'acide citrique, de façon avantageuse jusqu'à un pH compris entre 4 et 4,8,
(3) traitement thermique, avantageusement à 72°C pendant 1mn,
(4) homogénéisation du mélange obtenu.

15. Procédé selon l'une quelconque des revendications 9 à 14, **caractérisé en ce qu'**il comprend une étape supplémentaire (d) de conditionnement de la purée de fruits ou de légumes microfoisonnée.

**Claims**

1. Microfoamed fruit or vegetable purée containing native defatted soluble seric proteins and optionally a texturing agent, the overrun being less than or equal to 50%, the average diameter of the bubbles being less than 200 $\mu$m and the microfoamed fruit or vegetable purée being stable for at least 28 days at a temperature between 1 and 10°C.

2. The microfoamed fruit or vegetable purée according to claim 1, **characterised in that** the fruit is selected from apple, banana, raspberry and strawberry.

3. The microfoamed fruit or vegetable purée according to any one of the preceding claims, **characterised in that** it contains between 0.08 and 2% by weight of native defatted soluble seric proteins relative to the total weight of the fruit or vegetable purée.

4. The microfoamed fruit or vegetable purée according to any one of the preceding claims, **characterised in that** the texturing agent is pectin.

5. The microfoamed fruit or vegetable purée according to any one of the preceding claims, **characterised in that** it contains no gelatine.

6. The microfoamed fruit or vegetable purée according to any one of the preceding claims, **characterised in that** the native defatted soluble seric proteins contain at least 50% by weight of beta-lacta-globulin.

7. The microfoamed fruit or vegetable purée according to any one of the preceding claims, **characterised in that** it is deep-frozen or pasteurised and **in that** it has a Brix value of between 10° and 35°.

8. A fresh multilayer food product comprising at least one layer of fresh acid or neutral milk product, advantageously fermented, and at least one layer of microfoamed fruit or vegetable purée according to any one of claims 1 to 7.

9. A fresh food product comprising a mixture of a fresh acid or neutral milk product and a microfoamed fruit or vegetable purée according to any one of claims 1 to 7.

10. A method for preparing a microfoamed fruit or vegetable purée according to any one of claims 1 to 7 comprising the following successive steps:

   a) mixing 90 to 98% by weight, advantageously 95% by weight, of a fruit or vegetable purée and 2 to 10% by weight, advantageously 5% by weight, of a non-foamed foaming aqueous solution comprising native defatted soluble seric proteins and optionally a texturing agent;
   b) microfoaming of the mixture, advantageously by a dynamic foaming device, and
   c) recovering the microfoamed fruit or vegetable purée.

11. The method according to claim 10, **characterised in that** the mixture coming from step (a) has a viscosity between 0.5 and 8 Pa.s at 100 s$^{-1}$.

12. The method according to any one of claims 10 or 11, **characterised in that** the native defatted soluble seric proteins are in the form of isolates.

13. The method according to any one of claims 10 to 12, **characterised in that** it comprises a preliminary step ($\alpha$) of preparing the non-foamed foaming aqueous solution.

14. The method according to claim 13, **characterised in that** the preparation of the non-foamed foaming aqueous solution comprises the following steps:

   (1) mixing the native defatted soluble seric proteins, advantageously in the form of isolates, water and optionally texturing agent without incorporating air,
   (2) acidification, advantageously with citric acid, advantageously up to a pH between 4 and 4.8,
   (3) thermal treatment, advantageously at 72°C for 1 min,
   (4) homogenisation of the resulting mixture.

15. The method according to any one of claims 9 to 14, **characterised in that** it comprises an additional step (d) of packaging the microfoamed fruit or vegetable purée.

**Patentansprüche**

1. Mikrogeschäumtes Frucht- oder Gemüsepüree umfassend native entfettete lösliche Serumproteine und gegebenenfalls ein Verdickungsmittel, wobei der Schäumungsgrad niedriger oder gleich 50% ist, der mittlere Durchmesser der Bläschen niedriger als 200 $\mu$m ist und das mikrogeschäumte Frucht- oder Gemüsepüree während mindestens 28 Tagen bei einer Temperatur zwischen 1 und 10°C stabil ist.

2. Mikrogeschäumtes Frucht- oder Gemüsepüree gemäß Anspruch 1, **dadurch gekennzeichnet, dass** die Frucht ausgewählt ist aus Apfel, Banane, Himbeere und Erdbeere.

3. Mikrogeschäumtes Frucht- oder Gemüsepüree gemäß einem der vorangehenden Ansprüche, **dadurch gekennzeichnet, dass** es zwischen 0,08 und 2 Gew.-% an nativen entfetteten löslichen Serumproteinen in Verhältnis zum Gesamtgewicht des Frucht- oder Gemüsepürees enthält.

4. Mikrogeschäumtes Frucht- oder Gemüsepüree gemäß einem der vorangehenden Ansprüche, **dadurch gekennzeichnet, dass** das Verdickungsmittel Pektin ist.

5. Mikrogeschäumtes Frucht- oder Gemüsepüree gemäß einem der vorangehenden Ansprüche, **dadurch gekennzeichnet, dass** es keine Gelatine enthält.

6. Mikrogeschäumtes Frucht- oder Gemüsepüree gemäß einem der vorangehenden Ansprüche, **dadurch gekennzeichnet, dass** die nativen entfetteten löslichen Serumproteine mindestens 50 Gew.-% beta-Lactoglobuline enthalten.

7. Mikrogeschäumtes Frucht- oder Gemüsepüree gemäß einem der vorangehenden Ansprüche, **dadurch gekennzeichnet, dass** es tiefgekühlt oder pasteurisiert ist und, dass es einen Brix-Wert zwischen 10° und 35° hat.

8. Mehrschichtiges frisches Lebensmittel umfassend mindestens eine Schicht aus einem frischen sauren oder neutralen Milchprodukt, bevorzugt fermentiert, und mindestens eine Schicht aus mikrogeschäumtem Frucht- oder Gemüsepüree gemäß einem der Ansprüche 1 bis 7.

9. Frisches Lebensmittel umfassend eine Mischung aus einem frischen sauren oder neutralen Milchprodukt und aus einem mikrogeschäumten Frucht- oder Gemüsepüree gemäß einem der Ansprüche 1 bis 7.

10. Verfahren zur Herstellung eines mikrogeschäumten Frucht- oder Gemüsepürees gemäß einem der Ansprüche 1 bis 7 umfassend die folgenden, sukzessiven Schritte:

   a) Mischen von 90 bis 98 Gew.-%, bevorzugt 95 Gew.-% Frucht- oder Gemüsepüree und von 2 bis 10 Gew.-%, bevorzugt 5 Gew.-% einer schäumenden nicht geschäumten wässrigen Lösung, umfassend die nativen entfetteten löslichen Serumproteine und gegebenenfalls von einem Verdickungsmittel;
   b) Mikroaufschäumen des Gemischs, bevorzugt mittels eines dynamischen Aufschäumers und
   c) Gewinnen des mikrogeschäumten Frucht- oder Gemüsepürees.

11. Verfahren gemäß Anspruch 10, **dadurch gekennzeichnet, dass** das Gemisch aus Schritt (a) eine Viskosität zwischen 0,5 und 8 Pa.s pro $100s^{-1}$ hat.

12. Verfahren gemäß Anspruch 10 oder 11, **dadurch gekennzeichnet, dass** die nativen entfetteten löslichen Serumproteine in Form von Isolaten sind.

13. Verfahren gemäß einem der Ansprüche 10 bis 12, **dadurch gekennzeichnet, dass** es eine Vorstufe (α) der Herstellung der schäumenden nicht-geschäumten wässrigen Lösung umfasst.

14. Verfahren gemäß Anspruch 13, **dadurch gekennzeichnet, dass** die Herstellung der schäumenden nicht-geschäumten wässrigen Lösung die folgenden Schritte umfasst:

   (1) Mischen der nativen entfetteten löslichen Serumproteine, bevorzugt in Form von Isolaten, des Wassers und gegebenenfalls des Verdickungsmittels ohne Beimischung von Luft,
   (2) Ansäuern, bevorzugt mit Zitronensäure, bevorzugterweise bis zu einem pH zwischen 4 und 4,8,
   (3) Wärmebehandlung, bevorzugt bei 72°C während 1 Minute,
   (4) Homogenisieren des erhaltenen Gemischs.

15. Verfahren gemäß einem der Ansprüche 9 bis 14, **dadurch gekennzeichnet, dass** es einen zusätzlichen Schritt (d) der Aufbereitung des mikrogeschäumten Frucht- oder Gemüsepürees umfasst.

## RÉFÉRENCES CITÉES DANS LA DESCRIPTION

**Documents brevets cités dans la description**

- WO 200404481 A
- US 2131650 A
- EP 1166655 A
- EP 1284106 A

**Littérature non-brevet citée dans la description**

- les structures et technofonctions des protéines du lait. **Philippe Cayot ; Denis Lorient.** Arilait recherches. 1998, 105-203